# EUROPÄISCHE PATENTSCHRIFT

(11) **EP 3 130 443 B1**
(45) Veröffentlichungstag und Bekanntmachung des Hinweises auf die Patenterteilung: **13.06.2018**
(21) Anmeldenummer: 16166769.6
(22) Anmeldetag: 25.04.2016
(51) Int. Cl.: B29C 47/02, B29C 47/00

(54) **ADAPTIVES EXTRUSIONSWERKZEUG**
ADAPTATIVE EXTRUSION TOOL
OUTIL D'EXTRUSION ADAPTATIF

(30) Priorität: 11.08.2015 DE 102015215326
(43) Veröffentlichungstag der Anmeldung: 15.02.2017
(73) Patentinhaber: ContiTech Schlauch GmbH, 30165 Hannover (DE)
(72) Erfinder: Koch, Michael, 37589 Kalefeld (DE)
(74) Vertreter: Finger, Karsten

(56) Entgegenhaltungen:
- EP-A1- 0 492 297
- KR-A- 20150 024 538
- KR-B1- 101 454 893

## Beschreibung

Die Erfindung betrifft eine Vorrichtung zum Umspritzen von länglichen Gegenständen mittels eines Massenstromes aus elastomerem Material aus einem Extruder.

Bei der Umspritzung von länglichen Gegenständen, beispielsweise Drähten oder Rohren mit Elastomermaterial wird meist ein Extruder mit einem Querspritzkopf eingesetzt, wie ihn die DE 25 01 966 C3 oder die EP 0 231 976 B1 zeigen. Dabei ist erforderlich, dass die Extruderachse und der zu umspritzende Gegenstand in einer Ebene liegen, damit der Gegenstand durch den Querspritzkopf des Extruders geführt werden kann. Insbesondere bei kleineren Serien ist dies mit häufigen Umrüsten der Zuführeinrichtungen verbunden.

Daher sind nur speziell für dieses Verfahren ausgerüstete Extruder einsetzbar. Eine Produktion von ummantelten länglichen Gegenständen mit Standard-Geradeaus-Extrudern ist bisher nicht möglich. Der Einsatz von Extrudern mit durchbohrter Schnecke scheidet meist wegen der Schwierigkeiten bei der Schneckenbeheizung aus.

Die EP 0 492 297 A1 offenbart eine Vorrichtung zum Umspritzen von länglichen Gegenständen mittels eines Massestroms aus elastomerem Material, wobei eine einfache Umlenkung des Massenstromes bewirkt wird. Der Erfindung liegt die Aufgabe zugrunde, eine Vorrichtung der eingangs geschilderten Art so zu verbessern, dass eine Ummantelung von länglichen Gegenständen auch mit Standard- Geradeaus-Extrudern möglich ist.

Diese Aufgabe wird dadurch gelöst, dass die Vorrichtung ein adaptives Extrusionswerkzeug zur mindestens zweifachen Umlenkung des Massenstroms aufweist, wobei das adaptive Extrusionswerkzeug an seinem einen, dem Extruder zugeordneten Ende einen Standardanschluss aufweist, der mit einem Anschluss des Extruders korrespondiert und an seinem anderen, dem Extruder gegenüber liegenden Ende eine Düse zur Zuführung eines länglichen Gegenstandes in den Massenstrom zur Ummantelung aufweist.

Ein derartiges Werkzeug hat den Vorteil, dass eine nahezu beliebige Anordnung von zu ummantelnden Gegenstand zum Extruder möglich ist. Durch Variation der Länge des Werkzeugs ist die Zuführung oberhalb, unterhalb oder neben dem Extruder möglich.

In einer Weiterbildung der Erfindung weist das adaptive Extrusionswerkzeug mindestens einen Temperatursensor und mindestens einen Drucksensor auf.

Damit ist eine gute Prozessüberwachung möglich.

In einer Weiterbildung der Erfindung ist das adaptive Extrusionswerkzeug Z-förmig mit zwei Armen ausgebildet, wobei der obere und der untere Arm in einer Ebene liegen.

In einer Weiterbildung der Erfindung ist das adaptive Extrusionswerkzeug Z-förmig mit zwei Armen ausgebildet, wobei der obere und der untere Arm in beliebiger Raumrichtung gegeneinander einen von 0° verschiedenen Winkel zueinander aufweisen.

Zum einen kann ein ebenes Werkzeug leicht hergestellt werden und wird einen Großteil der möglichen Einsatzfälle abdecken. Ein nicht ebenes, also dreidimensional ausgebildetes Werkzeug ist dagegen geeignet, alle denkbaren Einsatzfälle abzudecken.

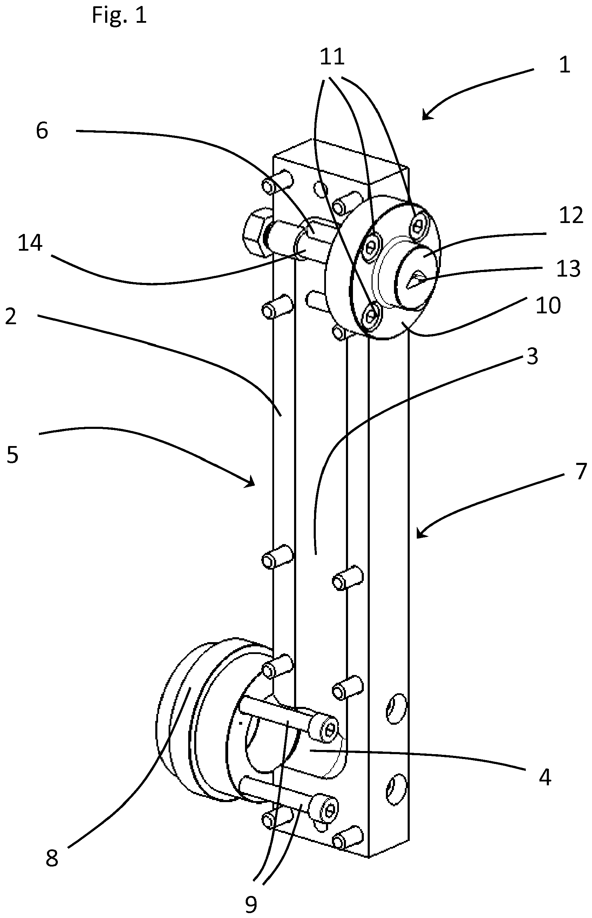

Anhand der Zeichnung wird nachstehend ein Beispiel der Erfindung näher erläutert. Die Fig. 1 zeigt ein erfindungsgemäßes adaptives Extrusionswerkzeug 1 in einem Längsschnitt. Das Werkzeug 1 weist einen Grundkörper 2 auf, der eine durchgehende Bohrung 3 aufweist. Die Bohrung 3 ist in etwa z-förmig ausgebildet. Ein erster Arm 4 der Bohrung 3 weist zu einer ersten Seite 5 des Grundkörpers 2 und ist zu dieser Seite geöffnet. Ein zweiter Arm 6 weist zu einer zweiten Seite 7 des Grundkörpers 2 und zu dieser Seite 7 geöffnet.

Vor der Öffnung des Armes 4 ist ein Flansch 8 angeordnet, der über Schrauben 9 mit dem Grundkörper 2 fest verschraubt ist. Dieser Flansch 8 korrespondiert mit einem hier nicht gezeigten Standard - Geradausextruder und ist an diesem Fluid dicht befestigbar.

Vor der Öffnung des Armes 6 ist ein Spritzkopf 10 angeordnet, der über Schrauben 11 mit dem Grundkörper 2 fest verschraubt ist. Mittig im Spritzkopf 10 ist ein Mundstück 12 angeordnet. Das Mundstück 12 weist eine Formöffnung 13 auf, deren Form einen zu extrudierendem Profil entspricht. Zum Mundstück 12 führt ein Hohlkanal 14, der durch den Arm 6 der Bohrung 3 hindurch führt und dicht mit dem Grundkörper 2 verschraubt ist. Durch den Hohlkanal 14 ist ein hier nicht gezeigter Draht durch die Öffnung 13 des Mundstücks 12 hindurchführbar.

Im Betrieb ist ein hier nicht gezeigtes Extrudat durch den Arm 4, die Bohrung 3 und den Arm 6 zum Mundstück 12 leitbar, welches durch die Öffnung 13 hindurch pressbar ist. Durch diesen Pressvorgang ist der nicht gezeigte Draht durch das ebenfalls nicht gezeigte Extrudat ummantelbar, wobei die Form der Ummantelung der Form der Öffnung 13 der Düse 12 entspricht.

Durch die Z-Form des Extrusionswerkzeuges 1 ist es möglich, die Lage des zu ummantelnden Gegenstandes nahezu unabhängig von der Lage des Extruders bzw. der Extruderschnecke zu wählen. Eine hier nicht gezeigte Verdrehung des Armes 6 gegen den Arm 4 ermöglicht darüber hinaus weitere dreidimensionale Anordnungen von zu ummantelnden Gegenstand gegenüber dem Extruder.

### Bezugszeichenliste

### (Teil der Beschreibung)

- 1: Adaptives Extrusionswerkzeug
- 2: Grundkörper
- 3: Bohrung
- 4: Erster Arm der Bohrung 3
- 5: Erste Seite des Grundkörpers 2
- 6: Zweiter Arm der Bohrung 3
- 7: Zweite Seite des Grundkörpers 2
- 8: Flansch
- 9: Schrauben des Flansches 8
- 10: Spritzkopf
- 11: Schrauben des Spritzkopfes 10
- 12: Mundstück
- 13: Formöffnung des Mundstücks 12
- 14: Hohlkanal

## Patentansprüche

1. Vorrichtung zum Umspritzen von länglichen Gegenständen mittels eines Massenstromes aus elastomerem Material aus einem Extruder, **dadurch gekennzeichnet, dass** die Vorrichtung ein adaptives Extrusionswerkzeug (1) zur mindestens zweifachen Umlenkung des Massenstroms aufweist, wobei das adaptive Extrusionswerkzeug (1) an seinem einen, dem Extruder zugeordneten Ende einen Standardanschluss (8) aufweist, der mit einem Anschluss des Extruders korrespondiert, und an seinem anderen, dem Extruder gegenüber liegenden Ende eine Düse (12, 13, 14) zur Zuführung eines länglichen Gegenstandes in den Massenstrom zur Ummantelung aufweist.

2. Vorrichtung nach Anspruch 1, **dadurch gekennzeichnet, dass** das adaptive Extrusionswerkzeug (1) mindestens einen Temperatursensor und mindestens einen Drucksensor aufweist.

3. Vorrichtung nach Anspruch 1 oder 2, **dadurch gekennzeichnet, dass** das adaptive Extrusionswerkzeug (1) Z-förmig mit zwei Armen (4, 6) ausgebildet ist, wobei der obere Arm (4) und der untere Arm (6) in einer Ebene liegen.

4. Vorrichtung nach Anspruch 1 oder 2, **dadurch gekennzeichnet, dass** das adaptive Extrusionswerkzeug (1) Z-förmig mit zwei Armen (4, 6) ausgebildet ist, wobei der obere Arm (4) und der untere Arm (6) in beliebiger Raumrichtung gegeneinander einen von 0° verschiedenen Winkel zueinander aufweisen.

## Claims

1. Device for extrusion-coating elongated articles by means of a mass flow of an elastomeric material from an extruder, **characterized in that** the device has an adaptive extrusion tool (1) for the at least double deflection of the mass flow, wherein the adaptive extrusion tool (1) has at its one end, assigned to the extruder, a standard connection (8), which corresponds to a connection of the extruder, and has at its other end, opposite from the extruder, a die (12, 13, 14) for feeding an elongated article into the mass flow for coating.

2. Device according to Claim 1, **characterized in that** the adaptive extrusion tool (1) has at least one temperature sensor and at least one pressure sensor.

3. Device according to Claim 1 or 2, **characterized in that** the adaptive extrusion tool (1) is formed in a Z-shaped manner with two arms (4, 6), wherein the upper arm (4) and the lower arm (6) lie in one plane.

4. Device according to Claim 1 or 2, **characterized in that** the adaptive extrusion tool (1) is formed in a Z-shaped manner with two arms (4, 6), wherein the upper arm (4) and the lower arm (6) are at an angle in relation to one another other than 0° in any spatial direction with respect to one another.

## Revendications

1. Dispositif de surmoulage d'objets allongés au moyen d'un débit massique de matériau élastomère provenant d'une extrudeuse, **caractérisé en ce que** le dispositif présente un outil d'extrusion adaptatif (1) pour produire au moins deux déviations du débit massique, l'outil d'extrusion adaptatif (1) présentant, à l'une de ses extrémités associée à l'extrudeuse, un raccord standard (8) qui correspond à un raccord de l'extrudeuse et à son autre extrémité opposée à l'extrudeuse, une buse (12, 13, 14) pour acheminer un objet allongé dans le débit massique en vue de son enrobage.

2. Dispositif selon la revendication 1, **caractérisé en ce que** l'outil d'extrusion adaptatif (1) présente au moins un capteur de température et au moins un capteur de pression.

3. Dispositif selon la revendication 1 ou 2, **caractérisé en ce que** l'outil d'extrusion adaptatif (1) est réalisé en forme de Z avec deux bras (4, 6), le bras supérieur (4) et le bras inférieur (6) étant situés dans un plan.

4. Dispositif selon la revendication 1 ou 2, **caractérisé en ce que** l'outil d'extrusion adaptatif (1) est réalisé en forme de Z avec deux bras (4, 6), le bras supérieur (4) et le bras inférieur (6), dans une orientation spatiale quelconque l'un par rapport à l'autre, formant l'un avec l'autre un angle différent de 0°.
